# EUROPÄISCHE PATENTSCHRIFT

(11) **EP 0 423 543 B1**
(45) Veröffentlichungstag und Bekanntmachung des Hinweises auf die Patenterteilung: **30.08.1995**
(21) Anmeldenummer: 90118934.0
(22) Anmeldetag: 04.10.1990
(51) Int. Cl.: G02B 6/38, G02B 6/42, G02B 26/02, G02B 26/08, G02B 6/36

(54) **Vorrichtung zur Positionierung von Lichtleitfasern**
Device for positioning of optical fibres
Dispositif pour positionner des fibres optiques

(30) Priorität: 20.10.1989 DE 3934993
(43) Veröffentlichungstag der Anmeldung: 24.04.1991
(73) Patentinhaber: DORNIER GMBH, D-88004 Friedrichshafen (DE)
(72) Erfinder: Johann, Ulrich, Dr.-Dipl-Phys., W-7778 Markdorf (DE); Sontag, Heinz, Dr.-Dipl-Phys., W-7990 Friedrichshafen (DE)
(74) Vertreter: Landsmann, Ralf, Dipl.-Ing.

(56) Entgegenhaltungen:
- EP-A- 0 287 253
- FR-A- 2 412 084

## Beschreibung

Die Erfindung betrifft eine Vorrichtung zur präzisen, zweidimensionalen Positionierung von Lichtleitfasern durch Ablenkung in elektrischen Feldern.

Präzise Lichtleitfaserpostioniereinheiten werden beispielsweise benötigt zur Einkopplung von Licht, insbesondere von Laserstrahlung, Kopplung von verschiedenen Lichtleitfasern, beispielsweise in faseroptischen Schaltern, oder zur präzisen Auskopplung von Licht aus Lichtleitfasern in größeren optischen Systemen. Hierfür werden üblicherweise mechanische, piezo-elektrisch betriebene, elektromechanische oder elektromagnetische Stelleinheiten eingesetzt. Den meisten Verfahren ist gemeinsam, daß die Lichtleitfaser an den bewegenden Mechanismus gekoppelt ist und daher die mechanischen Eigenschaften des Mechanismus die Charakteristik der Stelleinheit begrenzen.

Aus der FR 2 412 084 ist ein Faserschalter bekannt, in dem eine metallisch beschichtete Faser in einem elektrostatischen Feld zwischen zwei Elektroden bewegt wird. Die Bewegung der Faser erfolgt quer zur Faserachse in einer Richtung, die durch die Lage der beiden Elektroden definiert wird.

Aus der EP 0 287 253 ist ein weiterer Faserschalter bekannt, wobei der Kreuzungspunkt zweier Fasern umgeben ist von mehreren Elektrodenpaaren, die ein inhomogenes elektrisches Feld erzeugen. Durch das elektrische Feld wird eine der beiden Fasern, welche nicht völlig ungeladen ist, bewegt. Bei der zu bewegenden Faser handelt es sich um eine D-Faser. Diese ist beim Durchbiegen in einer Ebene normal zu ihrer flachen Oberfläche flexibler als bei beim Durchbiegen innerhalb einer durch die flache Oberfläche aufgespannten Ebene. Dadurch wird erreicht, daß die in dem elektrischen Feld zu bewegende Faser mit hoher Zuverlässigkeit eine Bewegung nur in eine Richtung ausführt.

Aufgabe der Erfindung ist es, eine zweidimensionale Ablenkung der Faser in einer Ebene mit Hilfe von nur einer Elektrode zu erreichen.

Die Aufgabe wird durch eine Vorrichtung nach Anspruch 1 gelöst. Ausgestaltungen sind Gegenstand von Unteransprüchen.

Gemäß der Erfindung wird eine Vorrichtung vorgeschlagen, bei der durch Ablenkung in elektrischen Feldern zweidimensionale Bewegungen von frei aufgehängten Lichtleitfasern im »m-Bereich mit sub-nm Auflösung möglich ist. Insbesondere kann durch den Betrieb der Positioniervorrichtung bei mechanischen Resonanzen des Faserendes eine sehr effiziente Modulation des Lichteinkoppelgrades erreicht werden. Die Vorrichtung arbeitet berührungslos und stellt elektrisch eine niedrige kapazitive Last dar.

Die Erfindung wird anhand einer Figur näher erläutert.

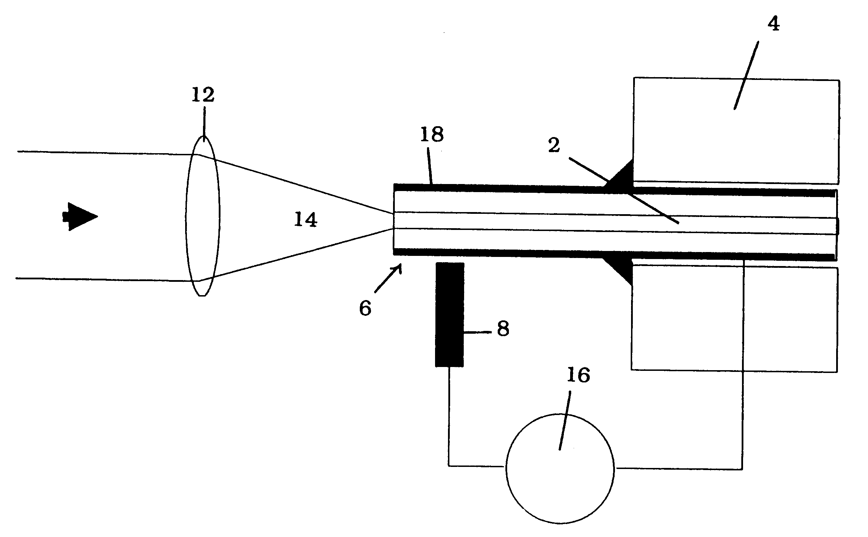

Die Figur zeigt anhand eines Lichteinkoppelsystems für Lichtleitfasern eine erfindungsgemäße Vorrichtung zur zweidimensionalen Ablenkung, die auf kapazitiver Wechselwirkung zwischen einer leitfähig beschichteten Lichtleitfaser 2 und einer Gegenelektrode 8 beruht. Hierbei ist das Ende 6 der Lichtleitfaser 2 mit einer leitfähigen Beschichtung 18 versehen. Zwischen der Elektrode 8 und der Beschichtung 18 wird ein elektrisches Feld erzeugt, das eine Kraft auf das Ende 6 der Faser 2 ausübt. Hierdurch wird der Einkoppelgrad des durch die Linse 12 fokussierten Lichtstrahls 14 moduliert. Elektrode 8 und Beschichtung 18 sind mit einem Netzgerät 16 verbunden.
In einer weiteren, hier nicht gezeigten Ausführung, wird auf die Beschichtung der Faser verzichtet. Die Wechselwirkung geschieht in diesem Fall durch eine induzierte Dipolwechselwirkung in dem durch die Elektrode 8 erzeugten inhomogenen elektrischen Feld.
Da die Faser 2 mit asymmetrischem Elastizitätsmodul oder mit asymmetrischer Befestigung am eingespannten Ende vorgesehen ist, genügt für die Erreichung einer zweidimensionalen Ablenkung eine einzige Elektrode.
Die Faser schwingt in diesem Falle mit unterschiedlicher mechanischer Resonanzfrequenz für die beiden Symmetrierichtungen. Bei geeigneter Winkelversetzung der anregenden Elektrode zu den Fasersymmetrieachsen und geeigneter Anregungsfrequenz werden bei eindimensionaler Anregung beide Richtungen angeregt und beispielsweise eine Kreisbewegung induziert.
In einem experimentellen Aufbau gemäß der Figur konnte durch Anregung durch ein elektrisches Wechselfeld, dessen Frequenz auf eine mechanische Resonanz des eingespannten Faserendes abgestimmt wurde, ein Modulationsgrad des eingekoppelten Lichts von über 90 % erreicht werden. Hierfür wurde eine Standard-Einmodenlichtleitfaser mit einem Durchmesser von 125 »m bei 800 nm verwendet. Die Länge des überstehenden Faserendes betrug 12 mm, wodurch sich die Eigenfrequenz zu 500 Hz ergab. Die Amplitude der angeregten Schwingung betrug ca. 4 »m bei einer Amplitude der angelegten Spannung von 12 V.

Die beschriebene erfindungsgemäße Vorrichtung ist klein, kompakt, leicht und robust und weist nur eine geringe Leistungsaufnahme auf. Sie erweist sich bei entsprechender Ausgestaltung als geeignet, die Enden von Lichtleitfasern zweidimensional zu bewegen, wobei auch kontinuierliche Bewegungsabläufe vorgenommen werden können.

## Patentansprüche

1. Faseroptische Einkoppeleinheit bestehend aus einer Lichtleitfaser (2), einer Halterung (4), einer Elektrode (8) und Mitteln, die zusammen mit der Elektrode (8) ein elektrisches Feld erzeugen, wobei die Lichtleitfaser (2) einseitig in der Halterung (4) fixiert ist und das freie Ende der Lichtleitfaser sich im Bereich des erzeugten Feldes befindet und durch die Erzeugung des Feldes bewegbar ist, **dadurch gekennzeichnet**, daß eine einzige Elektrode vorgesehen ist, die Faser (2) asymmetrisch bezüglich der Faserachse in der Halterung (4) fixiert ist oder ein asymmetrisches Elastizitätsmodul aufweist oder beides, und damit zwei Symmetrieachsen aufweist, die Elektrode (8) winkelversetzt zu den zwei Symmetrieachsen angebracht ist, so daß bei eindimensionaler Anregung durch die Elektrode (8) eine Ablenkung in beide Symmetrierichtungen angeregt und damit eine zweidimensionale Bewegung, beispielsweise eine Lissajous-Bewegung, induziert wird.

2. Faseroptische Einkoppeleinheit nach Anspruch 1, **dadurch gekennzeichnet**, daß die Lichtleitfaser (2) elektrisch leitfähig beschichtet ist.

## Claims

1. Fibre-optic coupling unit consisting of a light-conducting fibre (2), a holder (4), and an electrode (8) and means which, together with the electrode (8), generate an electrical field, wherein the light-conducting fibre (2) is secured in the holder (4) on one side and the free end of the light-conducting fibre is located in the vicinity of the generated field and is movable by the generation of the field, characterised in that a single electrode is provided, the fibre (2) is secured in the holder (4) asymmetrically in relation to the fibre axis or has an asymmetrical modulus of elasticity or both, and thus has two axes of symmetry, the electrode (8) is mounted offset by an angle in relation to the two axes of symmetry, such that in the case of one-dimensional excitation by the electrode (8) a deflection is excited in both axes of symmetry and thus a two-dimensional movement, for example a Lissajous movement, is induced.

2. Fibre-optic coupling unit according to claim 1, characterised in that the light-conducting fibre (2) comprises an electrically conductive coating.

## Revendications

1. Unité de couplage à fibre optique, comprenant une fibre optique (2), un support (4), une électrode (8) et des moyens qui, conjointement avec l'électrode (8), créent un champ électrique, la fibre optique (2) étant fixée unilatéralement dans le support (4) et l'extrémité libre de la fibre optique se situant dans la région du champ créé et pouvant être déplacée par la création du champ, caractérisée en ce qu'elle comprend une seule électrode, que la fibre (2) est fixée dans l support (4) de manière asymétrique par rapport à l'axe de la fibre ou qu'elle présente un module d'élasticité asymétrique, ou l'un et l'autre, et donc deux axes de symétrie, que l'électrode (8) est disposée avec un décalage angulaire par rapport aux deux axes de symétrie de telle façon qu'une excitation unidimensionnelle par l'électrode (8) provoque une déviation dans les deux directions de symétrie et induit donc un mouvement bidimensionnel, par exemple un mouvement de Lissajous.

2. Unité de couplage à fibre optique selon la revendication 1, caractérisée en ce que la fibre optique (2) présente un revêtement électriquement conducteur.
